# EUROPÄISCHE PATENTSCHRIFT

(11) **EP 0 923 623 B1**
(45) Veröffentlichungstag und Bekanntmachung des Hinweises auf die Patenterteilung: **23.05.2001**
(21) Anmeldenummer: 97919034.5
(22) Anmeldetag: 04.09.1997
(51) Int. Cl.: C09D 5/08, C09D 123/02, C09D 123/08, C08J 3/20

(54) **VERWENDUNG WÄSSRIGER POLYMERISATDISPERSIONEN FÜR DEN KORROSIONSSCHUTZ METALLISCHER OBERFLÄCHEN**
USE OF AQUEOUS POLYMER DISPERSIONS FOR PROTECTING METALLIC SURFACES AGAINST CORROSION
UTILISATION DE DISPERSIONS AQUEUSES DE POLYMERISATS POUR PROTEGER DES SURFACES METALLIQUES CONTRE LA CORROSION

(30) Priorität: 05.09.1996 DE 19636077
(43) Veröffentlichungstag der Anmeldung: 23.06.1999
(73) Patentinhaber: BASF AKTIENGESELLSCHAFT, 67056 Ludwigshafen (DE)
(72) Erfinder: BRODT, Gregor, D-64646 Heppenheim (DE); KINGMA, Arend, Jouke, D-67069 Ludwigshafen (DE); SCHRÖDER, Ulrich, D-67227 Frankenthal (DE)
(74) Vertreter: Kinzebach, Werner, Dr.
(86) Internationale Anmeldenummer: EP9704813
(87) Internationale Veröffentlichungsnummer: WO9810023

(56) Entgegenhaltungen:
- DE-A- 2 627 030
- LU-A- 70 609
- PATENT ABSTRACTS OF JAPAN vol. 015, no. 341 (C-0863), 29.August 1991 & JP 03 131370 A (KANSAI PAINT CO LTD), 4.Juni 1991,

## Beschreibung

Die vorliegende Erfindung betrifft die Verwendung wäßriger Polymerisatdispersionen, die als Komponente I) wenigstens ein Polymerisat und als Komponente II) wenigstens ein Farbmittel und/oder einen Korrosionsinhibitor sowie gegebenenfalls einen UV-Stabilisator umfassen, wobei Komponente II) nahezu vollständig in der Polymerphase gelöst oder dispergiert vorliegt, für den Schutz metallischer Oberflächen vor Korrosion.

Korrosion ist insbesondere bei metallischen Oberflächen ein ernstzunehmendes Problem. Korrosionsschäden, einschließlich ihrer Folgeschäden, verursachen Kosten, die mehrere Prozent unseres Bruttosozialproduktes ausmachen (siehe Römpps Chemie-Lexikon "Korrosion"). Aus diesem Grund wurden verschiedenste Verfahren entwickelt, metallische Werkstoffe vor Korrosion zu schützen. Beispielhaft seien hier die Lackierung, die Vergoldung, die Verchromung, die Plattierung, die Feuerverzinkung und die elektrolytische Verzinkung metallischer Oberflächen genannt. Auch die Kombination von verschiedenen Metallisierungsverfahren mit einer Lackierung sind dem Fachmann bekannt. Nicht alle Lackierungen sind als Korrosionsschutz des Grundmaterials oder der Metallisierungsschicht geeignet. Einige Lacke, insbesondere solche die aus wäßriger Dispersion aufgebracht werden, tragen oftmals sogar direkt zur Korrosion der Unterlage bei. Zudem treten bei vielen Lacken unter korrosiven Bedingungen dekorative Schäden, wie Versprödung, Aufreißen der Lackschicht, Eintrübung oder Verfärbung der Lackschicht, auf.

Prinzipiell sollten jedoch die genannten Probleme durch Verwendung geeigneter Polymerisate als Beschichtungen gelöst werden können. Aus Umweltschutzgründen werden dabei solche Polymerisate bevorzugt, die aus wäßriger Dispersion auf die zu schützende Oberfläche aufgetragen werden, und somit die Verwendung von Lösungsmitteln gegenüber den älteren Lösemittel-haltigen Lacken vermieden werden kann. Als Nachteil erweist sich jedoch, daß bei der Herstellung wäßriger Polymerisatdispersionen in der Regel Emulgatoren benötigt werden. Diese verbleiben in den Dispersionen, was dazu führt, daß die aus den Dispersionen hergestellten Beschichtungen ebenfalls die Emulgatoren enthalten. Bei längerer Bewitterung können diese aus den Beschichtungen herausdiffundieren und dadurch die Festigkeit der Beschichtung herabsetzen oder auch die zu schützende Metalloberfläche angreifen.

In der EP-A 201 702 sowie in der US-A 4,693,909 werden emulgatorfreie Dispersionen auf der Basis von Ethylen-Acrylsäure-Copolymerisaten beschrieben, die zur Beschichtung und somit für den Schutz von Metalloberflächen vor Korrosion geeignet sind. Von Nachteil ist jedoch, daß bei Härtung des Lackfilms bei erhöhter Temperatur Verfärbungen der Metalloberfläche auftreten können. Da die Lackdispersionen in der Regel farblos sind, weisen die beschichteten Gegenstände ein wenig attraktives Aussehen auf und sind somit nicht mehr verkäuflich.

Diesem Problem kann im Prinzip abgeholfen werden, wenn man den Dispersionen weiße oder farbige Pigmente zusetzt. Durch Zusatz von korrosionsinhibierenden Pigmenten kann darüber hinaus auch die schützende Wirkung der Lackbeschichtungen erhöht werden. Gewöhnlich werden jedoch derartige Pigmente mittels eines Emulgators in die fertige Lackdispersion eingerührt oder als fertige Pigmentdispersion, die mittels eines Emulgators hergestellt wurde, der Dispersion zugegeben. Neben den prinzipiellen Nachteilen, die aus der Verwendung von Emulgatoren herrühren, zeigt sich, daß die Handhabungseigenschaften durch die Pigmente verschlechtert werden. Beispielsweise ist die Kantenbedeckung der Werkstücke bei nur einfacher Lackierung schlecht. Zudem sind die durch die Pigmente hervorgerufenen Farbeffekt in der Regel bläßlich und wenig dekorativ. Verringert man die Emulgatormenge, sind derartige Dispersionen in der Regel nicht mehr stabil, erhöht man die Emulgatormenge, läßt die mechanische Stabilität der Lackierung nach. Pigmenthaltige Dispersionen auf der Basis von Ethylen-Acrylsäure-Copolymerisaten sind beispielsweise in der älteren US-Anmeldung Nr. USSN 08/625151 beschrieben.

In der älteren deutschen Anmeldeschrift P-19621037.2 werden emulgatorfreie, wäßrige Polymerisatdispersionen beschrieben, die farbige Pigmente, welche in der Polymerphase dispergiert vorliegen, enthalten. Als Verwendung wird der temporäre Schutz von Oberflächen, z.B. Glas, Keramik, lackiertes Metall, Kunststoff, vor mechanischer Beschädigung vorgeschlagen. Als besonderer Vorteil der aus den Polymerisatdispersionen erhältlichen Beschichtungen wird angegeben, daß sich diese im Stück wie eine Folie von der zu schützenden Oberfläche abziehen lassen.

Der vorliegenden Erfindung liegt die Aufgabe zugrunde, Farbmittel und/oder Korrosionsinhibitoren enthaltende, wäßrige Polymerisatdispersionen bereitzustellen, die keine oder nur geringe Mengen Emulgatoren enthalten, und die für den Korrosionsschutz von metallischen Oberflächen geeignet sind. Die aus den Dispersionen erhältlichen Beschichtungen sollen auf den metallischen Oberflächen eine gute Haftung, eine hohe mechanische Festigkeit und auch bei einmaligem Lackiervorgang eine gute Kantenbedeckung gewährleisten.

Es wurde nun überraschenderweise gefunden, daß die in der P-19621037.2 beschriebenen Polymerisatdispersionen auf metallischen Oberflächen sehr gut haften und sich für einen dauerhaften Schutz metallischer Oberflächen vor Korrosion eignen.

Die vorliegende Erfindung betrifft somit die Verwendung wäßriger Polymerisatdispersionen, umfassend als Komponente I)
wenigstens ein Polymerisat, das wenigstens ein. C₂-C₁₄-Olefin (Monomer a)), wenigstens ein Monomer b), das mit Monomer a) copolymerisierbar ist und wenigstens eine saure funktionelle Gruppe und/oder eine funktionelle Gruppe, die durch Hydrolyse in eine saure funktionelle Gruppe überführt wird, aufweist, und gegebenenfalls weitere Monomere c) einpolymerisiert enthält,
und als Komponente II)
wenigstens ein Farbmittel und/oder einen Korrosionsinhibitor sowie gegebenenfalls einen UV-Stabilisator, wobei Komponente II) nahezu vollständig in der Polymerphase gelöst oder dispergiert vorliegt,
für den Schutz metallischer Oberflächen vor Korrosion.

Unter Metalloberflächen versteht man hier und im folgenden sowohl unbehandelte Metall- und Metallegierungsoberflächen, z.B. Stahl, Aluminium, Messing, Kupfer, Nickel, Kobalt, Bronze, Silber, nachbehandelte Metall- und Metallegierungsoberflächen, z.B. vernikkelte Metalle, verzinkte Metalle, chromatierte Metalle, verzinkt und chromatierte Metalle sowie Metalloberflächen auf nichtmetallischen Trägern, die durch Vakuumbedampfung des Trägers, z.B. durch Besputterung, Kathodenzerstäubung oder Flash-Verdampfung, erhältlich sind.

Im folgenden bezeichnet C₁ bis Cₙ die jeweils mögliche Anzahl von Kohlenstoffatomen einer Verbindung oder eines Restes. Unter C₁-Cₙ-Alkyl versteht man lineare oder verzweigte Alkylgruppen mit 1 bis n Kohlenstoffatomen, z.B. Methyl, Ethyl, n-Propyl, i-Propyl, n-Butyl, 2-Butyl, i-Butyl, t-Butyl, n-Pentyl, 2-Pentyl, Neopentyl, n-Hexyl, 2-Ethylhexyl, n-Octyl, n-Decyl oder n-Dodecyl. Unter C₅-C₁₀-Cycloalkyl versteht man Cyclopentyl, Cyclohexyl, Cycloheptyl oder Cyclooctyl, das gegebenenfalls mit 1, 2 oder 3 C₁-C₄-Alkylgruppen, vorzugsweise Methyl oder Ethyl substituiert ist. Unter Aryl versteht man vorzugsweise Phenyl oder Naphthyl, das gegebenenfalls mit 1, 2, 3 oder 4 C₁-C₄-Alkylgruppen, C₁-C₄-Alkoxygruppen oder Halogenatomen substituiert ist. Aralkylgruppen sind über Alkylengruppen verbunden Arylgruppen, wie z.B. Benzyl oder Phenylethylen, welche gegebenenfalls auch substituiert sind.

Bevorzugte Monomere a) sind C₂-C₆-Olefine, insbesondere Ethylen, Propen, 1-Buten, 2-Buten oder Isobuten oder deren Mischungen, wobei Mischungen, die Ethylen als Hauptkomponente enthalten, bevorzugt sind. Besonders bevorzugt wird Ethylen als alleiniges Monomer a) verwendet.

Bevorzugte Monomere b) sind monoethylenisch ungesättigte Carbonsäuren und Dicarbonsäuren, insbesondere aliphatische α,β-ungesättigte Mono- und Dicarbonsäuren mit 3 bis 10 Kohlenstoffatomen, wie Acrylsäure, Methacrylsäure, Crotonsäure, 2-Ethylpropensäure, 2-Propylpropensäure, 2-n-Butylpropensäure, Maleinsäure, Fumarsäure, Itaconsäure und Citraconsäure. Ebenfalls geeignet sind die Halbester der genannten Dicarbonsäuren, vorzugsweise solche mit C₁-C₁₂-Alkanolen, z.B. Mono-n-butylmaleinsäureester, die Anhydride der genannten Dicarbonsäuren, wie Maleinsäureanhydrid, Itaconsäureanhydrid oder Citraconsäureanhydrid sowie aromatische Vinylcarbonsäuren, wie 2-, 3- oder 4-Vinylbenzoesäure. Weitere bevorzugte Monomere b) umfassen monoethylenisch ungesättigte Sulfonsäuren, z.B. Vinylsulfonsäure, Allylsulfonsäure, Vinylbenzolsulfonsäure, monoethylenisch ungesättigte Sulfinsäuren wie p-Vinylbenzolsulfinsäure, monoethylenisch ungesättigte Phosphonsäuren wie Vinylphosphonsäure bzw. deren Halbester, monoethylenisch ungesättigte Phosphorsäurehalbester wie Allylphosphat sowie die Alkalimetallsalze der genannten Säuren und Halbester. Besonders bevorzugte Monomere b) sind Acrylsäure, Methacrylsäure und Vinylsulfonsäure bzw. deren Alkalimetallsalze.

Bevorzugte Monomere c) umfassen als nicht vernetzende Monomere c₁) :
die Ester monoethylenisch ungesättigter Carbonsäuren,
die Amide monoethylenisch ungesättigter Carbonsäuren, z.B. Acrylamid, Methacrylamid sowie deren N-C₁-C₆-Alkyl- und deren N,N-Di-C₁-C₆-alkylderivate,
C₁-C₁₀-Alkylvinylether, z.B. Methylvinylether, Ethylvinylether, n-Propylvinylether, 2-Ethylhexylvinylether,
Diester monoethylenisch ungesättigter Dicarbonsäuren, vorzugsweise solche mit C₁-C₆-Alkanolen, z.B. Maleinsäuredimethylester oder Maleinsäuredi-n-butylester,
monoethylenisch ungesättigte Phosphorsäureester, monoethylenisch ungesättigte Phosphonsäureester wie Vinyphosphonsäuredi-C₁-C₆-alkylester,
Vinyl- und Allyl-C₂-C₁₂-Alkanoate, z.B. Vinyl- und Allylacetat, Vinyl- und Allylpropionat, Vinyl- und Allylbutyrat, Vinyl- und Allylvalerat, Vinyl- und Allylhexanoat, Vinyl- und Allylethylhexanoat sowie Vinyl- und Allyldecanoat.

Besonders bevorzugte Monomere c₁) umfassen die C₁-C₁₀-Alkylester, die C₅-C₁₀-Cycloalkylester, die C₆-C₂₀-Arylester und die C₇-C₂₀-Aralkylester, insbesondere jedoch die C₁-C₁₀-Alkylester der unter b) genannten Monocarbonsäuren. Ganz besonders bevorzugt werden die C₁-C₁₀-Alkylester der Methacrylsäure und/oder der Acrylsäure, z.B. Methylacrylat, Methylmethacrylat, Ethylacrylat, Ethylmethacrylat, n-Propylacrylat, n-Propylmethacrylat, n-Butylacrylat, n-Butylmethacrylat, 2-Butylacrylat, 2-Butylmethacrylat, t-Butylacrylat, t-Butylmethacrylat, n-Hexylacrylat, n-Hexylmethacrylat, 2-Ethylhexylacrylat und/oder 2-Ethylhexylmethacrylat.

Darüber hinaus umfassen die Monomere c) auch vernetzend wirkende bzw. vernetzbare Monomere c₂). Hierbei handelt es sich um polyfunktionelle Monomere, die neben der ethylenisch ungesättigten Bindung eine Epoxy-, Hydroxy-, n-Alkylol- oder eine Carbonylgruppe enthalten. Beispiele hierfür sind die N-Hydroxyalkyl- und N-Alkylolamide der genannten ethylenisch ungesättigten Carbonsäuren, beispielsweise 2-Hydroxyethyl(meth)acrylamid und N-Methylol(meth)acrylamid sowie Glycidylacrylat und Glycidylmethacrylat. Als vernetzend wirkende Monomere c₂) sind darüber hinaus solche Monomere geeignet, die 2 oder mehrere nicht-konjugierte, ethylenisch ungesättigte Bindungen aufweisen, wie die Diester zweiwertiger Alkohole mit den obengenannten ethylenisch ungesättigten Monocarbonsäuren, die Vinyl- oder Allylester der ethylenisch ungesättigten Carbonsäuren oder Divinylaromaten. Beispiele hierfür sind Ethylenglykoldiacrylat, 1,3-Butylenglykoldiacrylat, 1,4-Butylenglykoldiacrylat, Propylenglykoldiacrylat, Vinylmethacrylat, Vinylacrylat, Allylmethacrylat, Allylacrylat, Diallylmaleat, Diallylfumarat, Methylenbisacrylamid, Cyclopentadienylacrylat, Tricyclodecenyl(meth)acrylat, Divinylbenzol, Divinylnaphthalin, N,N'-Divinylimidazolin-2-on, Triallylphosphat oder Triallylcyanurat. In den bevorzugten Ausführungsformen der vorliegenden Erfindung enthalten die Polymerisate jedoch keine vernetzend wirkenden Monomere einpolymerisiert.

In den besonders bevorzugten Ausführungsformen der vorliegenden Erfindung enthalten die Polymerisate als Monomer a) Ethylen als alleiniges Monomer sowie als Monomer b) Acrylsäure und/oder Methacrylsäure sowie gegebenenfalls Vinylsulfonsäure bzw. deren Alkalimetallsalze und gegebenenfalls als Monomere c) ein oder mehrere C₁-C₁₀-Alkylacrylate oder -methacrylate einpolymerisiert.

In einer ganz besonders bevorzugten Ausführungsform enthalten die Polymerisate folgende Monomerkombinationen einpolymerisiert: Ethylen/Acrylsäure, Ethylen/Methacrylsäure, Ethylen/Acrylsäure/ Natrium- oder Kaliumvinylsulfonat, Ethylen/Acrylsäure/n-Butylacrylat, Ethylen/Acrylsäure/2-Hexylacrylat, Ethylen/Acrylsäure/ n-Butylmethacrylat, und Ethylen/Acrylsäure/2-Ethylhexylmethacrylat.

Die erfindungsgemäß zur Anwendung kommenden Polymerisatdispersionen enthalten in der Regel
50 bis 98 Gew.-%, insbesondere 60 bis 90 Gew.-% Monomere a)
2 bis 50 Gew.-%, vorzugsweise 10 bis 40 Gew.-% Monomere b)
0 bis 40 Gew.-%, vorzugsweise 0 bis 30 Gew.-% Monomere c₁) und
0 bis 5 Gew.-%, vorzugsweise 0 bis 1 Gew.-% Monomere c₂) mit einpolymerisiert.

Die relativen Anteile der Monomere a), b), c₁) und c₂) werden dabei so gewählt, daß die Filmbildetemperatur (vergleichbar mit der Glasübergangstemperatur nach Fox: Fox et al., Bull. Am. Phys. Soc. (Ser. II) 1, 123 (1956) zur Mindestfilmbildetemperatur siehe auch Ullmanns Enzyklopädie der technischen Chemie, 4. Auflage, Verlag Chemie, Weinheim (1980), Bd. 19, S. 17 ff) unterhalb 80°C, bevorzugt unterhalb 50°C und besonders bevorzugt unterhalb 25°C liegt.

Als Farbmittel bzw. als Korrosionsschutzmittel können im Prinzip alle dem Stand der Technik bekannten Farb- oder Korrosionsschutzmittel verwendet werden, die sich in die Polymerisate einarbeiten lassen, mit der Maßgabe, daß die Stabilität oder eine sonstige wesentliche Eigenschaft der Farb- oder Korrosionsschutzmittel nicht durch die im Polymerisat enthaltenen Säuregruppen nachteilig beeinflußt wird. Umgekehrt sollten die Farb- oder die Korrosionsschutzmittel die Stabilität der Polymerdispersionen und/oder der damit erzeugten Beschichtungen nicht nachteilig beeinflussen. Vorzugsweise sind die Farbmittel und die Korrosionsinhibitoren ausgewählt unter organischen Pigmenten, anorganischen Pigmenten, metallorganischen Pigmenten oder anderen organischen Verbindungen, die in der Wasserphase nicht löslich sind.

Beispiele für als Farbmittel geeignete anorganische Pigmente sind Titandioxid, Al₂O₃, Bariumsulfat, Strontiumsulfat, Zinkoxid, Zinkphosphate, schwarzes Eisenoxid, Bleichromat, Strontiumchromat, Bariumchromat, neuartige Effektpigmente, wie z.B. mit TiO₂ oder Al₂O₃ beschichtete Glimmerplättchen, sowie metallische Pigmente wie Aluminium- oder Bronzepulver.

Beispiele für als Farbmittel geeignete organische Pigmente umfassen:
Azopigmente, Metallkomplex-Pigmente, wie Azo- und Azomethin-Metallkomplexe, Isoindolinon- und Isoindolin-Pigmente, Phthalocyanin-Pigmente, Chinakridon-Pigmente, Perinon- und Perylen-Pigmente, Anthrachinon-Pigmente, Diketopyrrolopyrrol-Pigmente, Thioindigo-Pigmente, Dioxazine-Pigmente, Triphenylmethan-Pigmente, Chinophthalon-Pigmente und fluoreszierende Pigmente. Eine Zusammenstellung weiterer geeigneter Pigmente findet sich z.B. in "The Printing Ink Manual" D.E. Bisset et al. (Hrsg), 3rd ed, Verl. Van Nestrand Reinhold Co. Ltd, Wookingham UK, 1984, S. 209; Ullmanns Enzylkopädie der technischen Chemie, 5. Auflage, Bd. A3, S. 144-149, A20, S. 243-413 sowie H. Sechtling, Kunststoff-Taschenbuch, 21. Aufl., S. 40).

Geeignete Rostschutzinhibitoren umfassen insbesondere anorganische Pigmente, wie Zinkoxid, Zinkphosphate, Zinkborate, Aluminiumphosphate, z.B. Aluminiumorthophosphat, Aluminiummetaphosphat, Aluminiumtriphosphat, Kieselsäure oder Silikate, z.B. Calcium- oder Strontiumsilikate, Mischungen anorganischer Pigmente, z.B. Mischungen aus Aluminiumphosphaten und Zinkoxid sowie organische Pigmente, z.B. intrinsisch leitfähige Polymere wie Polypyrrol, Polythiophen oder Polyanilin.

Geeignete UV-Stabilisatoren sind alle für Kunststoffe verwendbaren anorganischen oder organischen UV-Stabilisatoren, wie beispielsweise substituierte Benzophenone, Salicylsäureester, Hydroxyphenylbenztriazole und sterisch gehinderte Amine wie 2,2,6,6-Tetramethylpiperidin, 2,6-Bis-tert.-butylpiperidin sowie deren Derivate, die unter der Bezeichnung Hindered Amine Light Stabilisators (HALS) bekannt sind. Sie werden in der Regel in Mengen von 0,01 bis 1 Gew.-%, bezogen auf das Polymerisat, verwendet.

Die erfindungsgemäß zur Anwendung kommenden Polymerisate sowie ihre Herstellung sind dem Fachmann im Prinzip bekannt. Sie lassen sich durch alle gängigen Polymerisationsverfahren, z.B. durch Emulsionspolymerisation (siehe Houben-Weyl, Methoden der anorganischen Chemie, Band E20/I, Makromolekulare Stoffe, Georg-Thieme-Verlag, Stuttgart, 1987), oder vorzugsweise durch kontinuierliche Hochdruckpolymerisation herstellen. Letztere Vorgehensweise empfiehlt sich insbesondere bei den leicht flüchtigen Olefinen Ethylen und Propylen. Zudem werden auf diesem Wege emulgatorfreie Polymerisatdispersionen erhalten.

Auch die kontinuierliche Hochdruckpolymerisation ist dem Fachmann im Prinzip bekannt und kann beispielsweise in der in DE-A 34 20 168 und der DE-A 35 12 564 beschriebenen Weise erfolgen. Die Polymerisation findet in der Regel bei Temperaturen im Bereich von 150 bis 300°C und einem Druck von 1000 bis 3000 bar in Gegenwart wenigstens eines Radikalstarters, beispielsweise einer Peroxoverbindung wie t-Butylperoxopivalat oder einer Azoverbindung wie Azobisisobutyronitril, statt. Darüber hinaus können bis zu 5 Gew.-%, bezogen auf die Monomere, an Reglern anwesend sein. Geeignete Regler sind beispielsweise aliphatische Aldehyde mit 3 bis 6 C-Atomen, insbesondere Propionaldehyd oder n-Butyraldehyd, aliphatische Ketone mit 3 bis 6 C-Atomen, z.B. Aceton oder Methylethylketon. Hierbei gilt zu beachten, daß die α-Olefine mit mehr als 3 C-Atomen ebenfalls als Regler in die Polymerisation mit eingreifen können. Die Polymerisationsbedingungen werden so eingestellt, daß die Polymerisate eine Schmelzviskosität bei 120°C von wenigstens von 1000 mm²/sec als untere Grenze (DFG-Einheitsmethode C-IV7 (68), gemessen bei 120°C) und einen MFI-Wert von wenigstens 1 (gemessen nach DIN 53753 bei 160°C und 325 g Belastung) als obere Grenze aufweisen.

Die Herstellung der Polymerisatdispersionen erfolgt in der Regel so, daß man das Farbmittel, den Korrosionsinhibitor und gegebenenfalls den UV-Stabilisator (Komponente II) in einem ersten Schritt nach üblichen Verfahren in die feste Polymerphase (Komponente I) einarbeitet. Dies kann in an sich bekannter Weise geschehen, beispielsweise durch gemeinsame Extrusion der Komponenten, durch kontinuierliche oder diskontinuierliche Verknetung oder durch Einrührung der Komponente II in das geschmolzene Polymer. Die Menge an Komponente II wird dabei so gewählt, daß sie im Bereich von 0,05 bis 50 Gew.-%, insbesondere 1 bis 40 Gew.-% und ganz besonders bevorzugt 1,5 bis 30 Gew.-%, bezogen auf die Polymerisatmasse, liegt.

In einem zweiten Schritt werden die nunmehr mit der Komponente II versehenen Polymerisate nach den üblichen Methoden in eine Dispersion überführt. Dies geschieht vorzugsweise in Gegenwart einer Base, beispielsweise Natrium- oder Kaliumhydroxid, Ammoniak, vorzugsweise jedoch in Gegenwart von Alkylaminen, -diaminen oder -triaminen, insbesondere solche, deren Alkylreste mit Hydroxylgruppen - in freier, ethoxylierter oder veresterter Form - substituiert sind.

Als Amine kommen insbesondere in Betracht: Mono-, Di- oder Trialkanolamine mit bevorzugt 2 bis 6 C-Atomen im Hydroxyalkylrest, Monoalkyldialkanolamine und Dialkylmonoalkanolamine mit jeweils 2 bis 8 C-Atomen im Alkyl- und Hydroxyalkylrest. Hierbei können die Alkyl- oder Hydroxyalkylketten auch Etherfunktionen enthalten. Selbstverständlich können auch Mischungen der genannten Basen verwendet werden. Besonders bevorzugte Amine sind beispielsweise Diethanolamin, Triethanolamin, 2-Amino-2-methylpropanol-1, Dimethylethanolamin und Diethylethanolamin, Dimethylaminodiglykol, Diethylaminodiglykol sowie Ethylendiamin oder Diethylentriamin.

Vorzugsweise enthalten die zur Anwendung kommenden Dispersionen keinen Emulgator, da die Polymerisate in der Regel selbstemulgierend sind.

Die mit Komponente II versehenen Polymerisate werden beispielsweise in einem Emulgierautoklaven bei Temperaturen oberhalb des Schmelzpunkt des Polymerisats, vorzugsweise im Bereich von 90 bis 180°C, insbesondere 90 bis 150°C und einem Druck zwischen Normaldruck und 4 bar, mit der notwendigen Menge Wasser und der entsprechenden Menge einer Base, vorzugsweise einem Amin, Diamin oder Triamin, und gegebenenfalls weiteren Hilfsmitteln unter Rühren dispergiert. Derartige Verfahren sind beispielsweise in der DE-A 35 12 564 beschrieben, auf die hier in vollem Umfang Bezug genommen wird. Anschließend wird unter fortgesetztem Rühren auf Raumtemperatur abgekühlt. Nach EP-A 359 045, auf die ebenfalls in vollem Umfang Bezug genommen wird, kann die Dispergierung auch in_ einem üblichen Extruder, vorzugsweise einem Zweiwellenmischer, durch Vermischen der Komponenten (Polymerisat, Wasser, Base und Hilfsstoffe) bei Temperaturen im Bereich von 70 bis 200°C und einem Druck von 1 bis 40 bar erfolgen. Hierbei besteht im Prinzip die Möglichkeit, die Einarbeitung der Komponente II in das Polymerisat mit dem Emulgiervorgang zu kombinieren.

Als Hilfsmittel, die vorzugsweise in Mengen von 0,5 bis 2 Gew.-%, bezogen auf die Gesamtmischung, zugesetzt werden, kommen insbesondere in Betracht:
Entschäumer, wie Ethylenoxid/Propylenoxid-Blockcopolymere mit 5 bis 50 EO/PO-Einheiten von Fettalkoholen mit 8 bis 20 C-Atomen, von Diolen oder Triolen wie Ethylenglykol und Ethylendiaminen, Verlaufsmittel, wie das Kaliumsalz des N-Ethyl-n-perfluoroctansulfonylglycins und Fluorad® FC 129 der Firma 3 M, oder auch Korrosionsschutzmittel, wie N-(2-Ethylhexyl)bernsteinsäurehalbamid, N-(2-Ethylhexyl)phthalsäurehalbamid, Phenylsufonylamidocapronsäure, Diisobutenylbernsteinsäure oder Medialansäure.

Für die erfindungsgemäße Verwendung zum Schutz metallischer Oberflächen vor Korrosion weisen die auf diesem Wege erhaltenen Polymerisatdispersionen vorzugsweise Feststoffgehalte im Bereich von 5 bis 40 Gew.-% und insbesondere im Bereich von 10 bis 35 Gew.-% auf. Die Menge an Base ist dabei so bemessen, daß wenigstens 40%, vorzugsweise wenigstens 50% und insbesondere wenigstens 60% der im Polymer vorhandenen Säuregruppen in neutralisierter Form vorliegen.

Gegenstand der vorliegenden Erfindung ist außerdem ein Verfahren zum Schutz metallischer Oberflächen vor Korrosion unter Verwendung der erfindungsgemäßen Polymerisatdispersionen. Dies geschieht durch Beschichten der zu schützenden Metalloberflächen mit der Polymerisatdispersion. Aufgrund der günstigen rheologischen Eigenschaften der Dispersionen ist es möglich, hierfür eines der üblichen Verfahren einzusetzen. Geeignete Verfahren sind beispielsweise Lackieren mit einem üblichen Farbauftragsystem, ein- oder mehrmaliges Tauchen der zu beschichtenden Teile in die Polymerisatdispersion, Aufsprühen der Polymerdispersion in einem oder mehreren Durchgängen, beispielsweise durch Airless-Spritzen mit Hilfe einer Druckpistole, "Spin-coating" oder elektrostatische Lackierung. Hieran schließt sich in der Regel ein Trocknungsschritt an. Die Trocknung erfolgt bei Raumtemperatur oder bei erhöhter Temperatur, beispielsweise in einem Warmluftstrom oder mit Hilfe von Infrarotlicht. Das Aufbringen der Beschichtung kann in einem einmaligen Vorgang oder aber wiederholt mit zwischenzeitlichen Trocknungsphasen erfolgen. Die Menge an Dispersion pro Flächeneinheit wird so gewählt, daß man nach dem Trocknen eine Schichtdicke von vorzugsweise weniger als 50 µm, besonders bevorzugt weniger als 20 µm und ganz besonders bevorzugt weniger als 10 µm erhält. Die getrocknete Dispersion ist nach dem Trocknen griffest. Ein zusätzlicher Einbrennschritt im Anschluß an das Trocknen ist nicht nötig, er kann jedoch die mechanische Widerstandsfähigkeit der Beschichtung weiter steigern.

Durch die Verwendung der erfindungsgemäßen Dispersionen nach dem erfindungsgemäßen Verfahren ist es möglich, verschiedenste Metall- und Metallegierungsoberflächen vor Korrosion zu schützen. Gleichzeitig ermöglicht die Einfärbung der Polymerisatdispersionen, dekorative Oberflächen in einer gewünschten Farbe zu erzielen. Dabei erweist es sich als besonders vorteilhaft, daß diese Eigenschaften in einem Arbeitsgang erreicht werden. Die Beschichtungen zeichnen sich zudem durch erhöhte Stabilität gegenüber bekannten Beschichtungen, beispielsweise gegenüber Kratzern oder dem Absplittern der Lackierung bei mechanischer Belastung aus.

Die Erfindung wird nun anhand der folgenden nicht limitierenden Beispiele weiter erläutert.

### Beispiele

### Einsatzstoffe

Die Herstellung der verwendeten Polymerisate erfolgte in Anlehnung an Beispiel 1 der DE-A 35 12 564 durch Hochdruckpolymerisation der Monomere. Die Eigenschaften der Polymere sind in Tabelle 1 zusammengefaßt.

**Tabelle 1**

| Polymer Nr. | Monomere | | | MFI_{160/325} [g/min] |
|---|---|---|---|---|
| | Ethylen | Acrylsäure | Ethylhexylacrylat | |
| 1 | 79 | 21 | - | 10 |
| 2 | 68 | 16 | 16 | 8 |
| 3 | 60 | 20 | 20 | 11 |

Der MFI-Wert (Melt Flow Index) gibt die Menge Polymerisatschmelze in Gramm an, die bei gegebener Temperatur und gegebener Belastung in einer bestimmten Zeit durch eine genormte Düse durchgepreßt wird. Die Bestimmung erfolgt gemäß DIN 53735. Der jeweils angegebene Index gibt die Meßtemperatur (°C) und die Belastung (g) an.

### Herstellung der gefärbten Polymere (Beispiele 1 bis 12)

Die Herstellung der verwendeten gefärbten Polymere erfolgte in einem Doppelschneckenextruder. Hierzu wurde das Ethylen/Acrylsäure-Copolymer Nr. 1 bei 100°C extrudiert. Über einen Seitenansatz wurde das jeweilige Farbpigment so zudosiert, daß die gewünschte Farbstärke gegeben war. Die jeweiligen Pigmente und Mengen sind in Tabelle 2 zusammengefaßt.

Heliogen® Blau K 6902 ist ein Phthalocyaninpigment der Fa. BASF AG, Paliotol® Gelb K 1841 ein Gelbpigment der Fa. BASF AG und Paliogen® Rot K 3911 HD ein rotes Metallkomplexpigment der Fa. BASF AG.
Titandioxid Cl 2220 wurde von der Fa. Kronos AG bezogen.
Printex® ist ein Ruß-Pigment der Fa. Degussa AG.

**Tabelle 2**

| Beispiel Nr. | Farbe | Pigment | Gew.-% Pigment |
|---|---|---|---|
| 1 | schwarz | Printex® | 2 |
| 2 | schwarz | Printex® | 5 |
| 3 | schwarz | Printex® | 10 |
| 4 | schwarz | Printex® | 20 |
| 5 | blau | Heliogen® Blau K 6902 | 2 |
| 6 | blau | Heliogen® Blau K 6902 | 5 |
| 7 | weiß | Titandioxid Cl 2220 | 2 |
| 8 | weiß | Titandioxid Cl 2220 | 5 |
| 9 | gelb | Paliotol® Gelb K 1841 | 2 |
| 10 | gelb | Paliotol® Gelb K 1841 | 5 |
| 11 | rot | Paliogen® Rot 3911 HD | 2 |
| 12 | rot | Paliogen® Rot 3911 HD | 5 |

### Herstellung der gefärbten Dispersion (Beispiele 13 bis 21)

210 Teile gefärbtes Polymerisat wurden in einem Rührkessel mit Amin und Wasser bei 115°C gerührt, bis nach ca. 1 bis 2 Stunden eine gleichmäßige Dispersion entstanden war. Man ließ unter Rühren abkühlen und filtrierte von groben Bestandteilen. Die jeweiligen Parameter sind Tabelle 3 zu entnehmen.

**Tabelle 3**

| Beispiel Nr. | gefärbtes Polymer Nr. | Amin | Gew.-Teile Amin | Gew.-Teile Wasser |
|---|---|---|---|---|
| 13 | 2 | Dimethylethanolamin | 36 | 754 |
| 14 | 3 | Dimethylethanolamin | 36 | 754 |
| 15 | 5 | Dimethylethanolamin | 36 | 754 |
| 16 | 9 | Dimethylethanolamin | 36 | 754 |
| 17 | 11 | Dimethylethanolamin | 36 | 754 |
| 18 | 7 | Dimethylethanolamin | 36 | 754 |
| 19 | 7 | 2-Amino-2-methylpropanol-1 | 35,6 | 754,4 |
| 20 | 7 | Diethanolamin | 45,3 | 744,7 |
| 21 | 7 | Triethanolamin | 87,2 | 702,8 |

Vergleichsbeispiel 1 und 2 (entsprechend Beispielen 1 bzw. 8 der USSN 08/625151).

### Vergleichsbeispiel 1:

25 Gew.-% einer Ethylen/Acrylsäure-Dispersion (Luwax® EAS 2 der Fa. BASF AG) wurden in einem Rührkessel mit 20 Gew.-% einer Rußdispersion (Luconyl® Black 0066 der Fa. BASF AG) gemischt.

### Vergleichsbeispiel 2:

7,5 Gew.-% einer Ethylen/Acrylsäure-Dispersion (Luwax® EAS 2 der Fa. BASF AG) wurden in einem Rührkessel mit 2,5 Gew.-% eines Wachsoxidats (Luwax® OA 3 der Fa. BASF AG) und 5 Gew.-% einer Rußdispersion (Luconyl® Black 0066 der Fa. BASF AG) gemischt.

Folgende Versuche wurden zur Feststellung der Dispersionsstabilität und der Beschichtungseigenschaften herangezogen (siehe Tabelle 4).

Die Gitterschnittprüfung (GS) wurde analog DIN EN ISO 2409 durchgeführt. Als Unterlage diente dabei ein frisch entfettetes Messingblech. Die Prüfergebnisse wurden wie folgt klassifiziert

| | |
|---|---|
| 0 | Schnittränder vollkommen glatt; keines der Quadrate des Gitters ist abgeplatzt. |
| 1 | An den Schnittpunkten der Gitterlinien sind kleine Splitter der Beschichtung abgeplatzt. Abgeplatzte Fläche nicht größer als 5% der Gitterschnittfläche. |
| 2 | Die Beschichtung ist längs der Schnittränder und/oder an den Schnittpunkten der Gitterlinien abgeplatzt. Abgeplatzte Fläche deutlich > 5%, aber nicht wesentlich > 15%. |
| 3 | Die Beschichtung ist längs der Schnittränder ganz, teilweise oder ganz in breiten Streifen abgeplatzt, und/oder einige Quadrate sind ganz oder teilweise abgeplatzt. 15 bis 35% der Gitterschnittfläche ist betroffen. |
| 4 | Die Beschichtung ist längs der Schnittränder ganz in breiten Streifen abgeplatzt und/oder einige Quadrate sind ganz oder teilweise abgeplatzt. 35 bis 65% der Gitterschnittfläche sind betroffen. |
| 5 | Jedes Abplatzen schlechter als Kennwert 4. |

Die Dispersionsstabilität (DS) wurde optisch anhand von 30 Tage alten Proben beurteilt. Die frisch hergestellten Dispersionen wurden dafür in ein 250 ml Schraubdeckelglas gefüllt und 30 Tage unberührt bei Raumtemperatur gelagert. Die Dispersionsstabilität wurde nach der abgelaufenen Zeit anhand des gebildeten Bodensatzes und der Transparenz der überstehenden Dispersion beurteilt.

Die Farbstärke (F) und der Glanz (G) wurden anhand von einmal in die erfindungsgemäße Dispersion getauchten, verzinkten und gelbchromatierten Stahlblechen nach folgenden Skalen optisch beurteilt:

| Farbstärke | |
|---|---|
| 1 | sehr guter Bedeckungsgrad - kein Durchscheinen des Grundmaterials |
| 2 | guter Bedeckungsgrad - leichtes Durchscheinen des Grundmaterials |
| 3 | mittlerer Bedeckungsgrad - mittleres Durchscheinen des Grundmaterials |
| 4 | schlechter Bedeckungsgrad - starkes Durchscheinen des Grundmaterials |
| 5 | keine Bedeckung - Grundmaterial ist nicht bedeckt |

| Glanz | |
|---|---|
| 1 | sehr guter Glanz - kein Schleier auf der Lackoberfläche erkennbar |
| 2 | guter Glanz - geringer Schleier auf der Lackoberfläche erkennbar |
| 3 | mittlerer Glanz - Schleier auf der Lackoberfläche erkennbar |
| 4 | schlechter Glanz - matte Lackoberfläche |

Die Kantenbedeckung (KB) wurde an den Kanten von einmal in die erfindungsgemäße Dispersion getauchten, verzinkten und gelbchromatierten Stahlblechen beurteilt und in die Kategorien gut, noch akzeptabel und schlecht eingeteilt.

Der Korrosionsschutz wurde analog zur DIN 50021 - Salzsprühtest (SST) - geprüft. Dazu wurden verzinkte und gelbchromatierte Stahlbleche mit einem Film der erfindungsgemäßen Dispersionen mit einer Naßfilmdicke von 50 µm beschichtet, was einer Trockenfilmdicke von ca. 10 µm entspricht, und in einer handelsüblichen Salzsprühkammer getestet. Die Zeit in Stunden bis der Rostgrad 2 erreicht ist, wird hier angegeben.

**Tabelle 4**

| Beispiel Nr. | GS | DS | F | G | KB | SST |
|---|---|---|---|---|---|---|
| 13 | 1-2 | kein Bodensatz | 1-2 | 1 | gut | 576 |
| 14 | 2 | kein Bodensatz | 1 | 1 | gut | 528 |
| VB 1 | 3 | starker Bodensatz | 1-2 | 3 | schlecht | 312 |
| VB 2 | 2-3 | Bodensatz | 2 | 2-3 | noch akzeptabel | 408 |
| 135/hz | | | | | | |

## Patentansprüche

1. Verwendung wäßriger Polymerisatdispersionen, umfassend als Komponente I)
wenigstens ein Polymerisat, das wenigstens ein C₂-C₁₄-Olefin (Monomer a)), wenigstens ein Monomer b), das mit Monomer a) copolymerisierbar ist und wenigstens eine saure funktionelle Gruppe und/oder eine funktionelle Gruppe, die durch Hydrolyse in eine saure funktionelle Gruppe überführt wird, aufweist, und gegebenenfalls weitere Monomere c) einpolymerisiert enthält,
und als Komponente II)
wenigstens ein Farbmittel und/oder einen Korrosionsinhibitor sowie gegebenenfalls einen UV-Stabilisator, wobei Komponente II) nahezu vollständig in der Polymerphase gelöst oder dispergiert vorliegt, und wobei der Gehalt an Farbmittel und/oder Korrosionsinhibitor im Bereich von 0,05 bis 50 Gew.-%, bezogen auf das Gewicht des Polymerisats, liegt.
für den Schutz metallischer Oberflächen vor Korrosion.

2. Verwendung nach Anspruch 1, wobei die Monomere b) ausgewählt sind unter monoethylenisch ungesättigten Carbonsäuren, monoethylenisch ungesättigten Dicarbonsäuren, deren Anhydriden, deren Halbestern, monoethylenisch ungesättigten Sulfonsäuren, monoethylenisch ungesättigten Sulfinsäuren, monoethylenisch ungesättigten Phosphonsäuren bzw. deren Halbestern, monoethylenisch ungesättigten Phosphorsäurehalbestern sowie den Alkalimetallsalzen der genannten Säuren und Halbester.

3. Verwendung nach einem der vorhergehenden Ansprüche, wobei die Monomere c) ausgewählt sind unter den Estern monoethylenisch ungesättigter Carbonsäuren, deren Amiden, den Diestern monoethylenisch ungesättigter Dicarbonsäuren, C₁-C₁₀-Alkylvinylethern, Vinyl- und Allyl-C₂-C₁₂-alkanoaten, monoethylenisch ungesättigten Phosphorsäureestern, monoethylenisch ungesättigten Phosphonsäureestern (Monomere c₁), und gegebenenfalls vernetzend wirkenden Monomeren c₂).

4. Verwendung nach Anspruch 3, wobei die Monomere c₁) ausgewählt sind unter C₁-C₁₀-Alkylestern, C₅-C₁₀-Cycloalkylestern, C₆-C₂₀-Arylestern und C₇-C₂₀-Aralkylestern monoethylenisch ungesättigter Carbonsäuren.

5. Verwendung nach einem der vorhergehenden Ansprüche, wobei die Monomere a) Ethylen und gegebenenfalls Propen, 1-Buten, 2-Buten und Isobuten umfassen.

6. Verwendung nach Anspruch 5, wobei das Polymerisat als Monomer a) Ethylen, als Monomer b) Acrylsäure und/oder Methacrylsäure sowie gegebenenfalls Vinylsulfonsäure bzw. deren Alkalimetallsalz und gegebenenfalls als Monomer c) C₁-C₁₀-Alkylacrylat und/oder C₁-C₁₀-Alkylmethacrylat einpolymerisiert enthält.

7. Verwendung nach einem der vorhergehenden Ansprüche, wobei das Polymerisat
50 bis 98 Gew.-% Monomere a)
2 bis 30 Gew.-% Monomere b)
0 bis 48 Gew.-% Monomere c₁) und
0 bis 5 Gew.-% Monomere c₂) einpolymerisiert enthält.

8. Verwendung nach einem der vorhergehenden Ansprüche, wobei das Farbmittel und der Korrosionsinhibitor ausgewählt sind unter organischen Pigmenten, anorganischen Pigmenten, metallorganischen Pigmenten oder anderen organischen Verbindungen, die in der Wasserphase nicht löslich sind.

9. Verwendung nach einem der vorhergehenden Ansprüche, wobei der Polymerisatgehalt der Dispersion im Bereich von 5 bis 40 Gew.-%, bezogen auf das Gesamtgewicht der Dispersion, liegt.

10. Verwendung nach einem der vorhergehenden Ansprüche, wobei wenigstens 40% der im Polymerisat enthaltenen sauren Gruppen in neutralisierter Form vorliegen.

11. Verwendung nach Anspruch 11, wobei die im Polymer enthaltenen sauren Gruppen mit einem niedermolekularen Amin neutralisiert werden.

12. Verfahren zum Schutz metallischer Oberflächen vor Korrosion, dadurch gekennzeichnet, daß man eine Polymerisatdispersion aus einem der Ansprüche 1 bis 11 auf die zu schützende Metalloberfläche aufträgt und anschließend die aufgetragene Dispersionsschicht trocknet, wobei eine feste Polymerschicht auf der zu schützenden Oberfläche ausgebildet wird.

13. Verfahren nach Anspruch 12, dadurch gekennzeichnet, daß die feste Polymerschicht eine Trockenschichtdicke unterhalb 20 µm aufweist.

## Claims

1. The use of an aqueous polymer dispersion comprising as component I)
at least one polymer which includes in copolymerized form at least one C₂-C₁₄-olefin (monomer a)), at least one monomer b), which is copolymerizable with monomer a) and has at least one acidic functional group and/or a functional group which is converted by hydrolysis into an acidic functional group, and, if desired, further monomers c),
and as component II)
at least one colorant and/or one corrosion inhibitor and, if desired, a UV stabilizer, component II) being almost completely dispersed or dissolved in the polymer phase, and where the content of colorant and/or corrosion inhibitor is in the range from 0.05 to 50% by weight, based on the weight of the polymer,
for protecting metallic surfaces against corrosion.

2. The use as claimed in claim 1, where the monomers b) are selected from the group consisting of monoethylenically unsaturated carboxylic acids, monoethylenically unsaturated dicarboxylic acids, their anhydrides, their monoesters, monoethylenically unsaturated sulfonic acids, monoethylenically unsaturated sulfinic acids, monoethylenically unsaturated phosphonic acids and the monoesters thereof, monoethylenically unsaturated phosphoric monoesters and also the alkali metal salts of these acids and monoesters.

3. The use as claimed in either of the preceding claims, where the monomers c) are selected from the group consisting of the esters of monoethylenically unsaturated carboxylic acids, their amides, the diesters of monoethylenically unsaturated dicarboxylic acids, C₁-C₁₀-alkyl vinyl ethers, vinyl and allyl C₂-C₁₂-alkanoates, monoethylenically unsaturated phosphoric esters, monoethylenically unsaturated phosphonic acids (monomers c₁),
and possibly crosslinking monomers c₂).

4. The use as claimed in claim 3, where the monomers c₁) are selected from the group consisting of C₁-C₁₀-alkyl esters, C₅-C₁₀-cycloalkyl esters, C₆-C₂₀-aryl esters and C₇-C₂₀-aralkyl esters of monoethylenically unsaturated carboxylic acids.

5. The use as claimed in any of the preceding claims, where the monomers a) comprise ethylene and, if desired, propene, 1-butene, 2-butene and isobutene.

6. The use as claimed in claim 5, where the polymer comprises in copolymerized form as monomer a) ethylene, as monomer b) acrylic acid and/or methacrylic acid and also, if desired, vinylsulfonic acid or one of its alkali metal salts and, if desired, as monomer c) C₁-C₁₀-alkyl acrylate and/or C₁-C₁₀-alkyl methacrylate.

7. The use as claimed in any of the preceding claims, where the polymer comprises, in copolymerized form,
from 50 to 98 % by weight of monomer a),
from 2 to 30 % by weight of monomer b),
from 0 to 48 % by weight of monomer c₁) and
from 0 to 5 % by weight of monomer c₂).

8. The use as claimed in any of the preceding claims, where the colorant and the corrosion inhibitor are selected from organic pigments, inorganic pigments, organometallic pigments or other organic compounds which are not soluble in the aqueous phase.

9. The use as claimed in any of the preceding claims, where the polymer content of the dispersion is in the range from 5 to 40% by weight, based on the overall weight of the dispersion.

10. The use as claimed in any of the preceding claims, where at least 40% of the acidic groups present in the polymer are in neutralized form.

11. The use as claimed in claim 10, where the acidic groups present in the polymer are neutralized with an amine of low molecular mass.

12. A method of protecting metallic surfaces against corrosion, which comprises applying a polymer dispersion from one of claims 1 to 11 to the metal surface that is to be protected and then drying the applied dispersion coat, to form a solid polymer film on the surface that is to be protected.

13. The method as claimed in claim 12, wherein the solid polymer film has a dry film thickness of below 20 µm.

## Revendications

1. Utilisation de dispersions aqueuses de polymère comprenant comme composant I)
au moins un polymère, qui comporte au moins une oléfine en C₂ à C₁₄ (monomère a)), au moins un monomère b), qui est copolymérisable avec le monomère a) et porte au moins un groupe fonctionnel acide et/ou un groupe fonctionnel qui est transformé par hydrolyse en un groupe fonctionnel acide, et qui contient éventuellement d'autres monomères c) à l'état polymérisé,
et comme composant II)
au moins un colorant et/ou un agent anti-corrosion ainsi qu'éventuellement un stabilisant envers les UV, le composant II) étant présent presque complètement à l'état dissous ou dispersé dans la phase polymère, et la teneur en colorant et/ou en agent anti-corrosion étant dans la plage de 0,05 à 50% en poids, par rapport au poids du polymère,
pour protéger les surfaces métalliques contre la corrosion.

2. Utilisation selon la revendication 1, dans laquelle les monomères b) sont choisis parmi les acides carboxyliques à insaturation mono-éthylénique, les acides dicarboxyliques à insaturation mono-éthylénique, leurs anhydrides, leurs demi-esters, les acides sulfoniques à insaturation mono-éthylénique, les acides sulfiniques à insaturation mono-éthylénique, les acides phosphoniques à insaturation mono-éthylénique, ou bien leurs demi-esters, les demi-esters d'acide phosphorique à insaturation mono-éthylénique ainsi que les sels de métal alcalin des acides et demi-esters cités.

3. Utilisation selon une quelconque des revendications précédentes, dans laquelle les monomères c) sont choisis parmi les esters d'acides carboxyliques à insaturation mono-éthylénique, leurs amides, les diesters d'acides dicarboxyliques à insaturation mono-éthylénique, les éthers vinyliques d'alkyle en C₁ à C₁₀, les alcanoates en C₂ à C₁₂ de vinyle et d'allyle, les esters d'acide phosphorique à insaturation mono-éthylénique, les esters d'acide phosphonique à insaturation mono-éthylénique (monomères c₁)), et éventuellement des monomères c₂) à effet réticulant.

4. Utilisation selon la revendication 3, dans laquelle les monomères c₁) sont choisis parmi les esters d'alkyle en C₁ à C₁₀, les esters de cycloalkyle en C₅ à C₁₀, les esters d'aryle en C₆ à C₂₀, et les esters d'aralalkyle en C₇ à C₂₀ d'acides carboxyliques à insaturation mono-éthylénique.

5. Utilisation selon l'une quelconque des revendications précédentes, dans laquelle les monomères a) comprennent l'éthylène et éventuellement le propène, le 1-butène, le 2-butène et l'isobutène.

6. Utilisation selon la revendication 5, dans laquelle le polymère contient, à l'état polymérisé, comme monomère a) l'éthylène, comme monomère b), l'acide acrylique et/ou l'acide (méth)acrylique ainsi qu'éventuellement l'acide vinylsulfonique ou bien leur sel de métal alcalin et éventuellement comme monomère c) un acrylate d'alkyle en C₁ à C₁₀ et/ou un (méth)acrylate d'alkyle en C₁ à C₁₀.

7. Utilisation selon l'une quelconque des revendications précédentes, dans laquelle le polymère contient, à l'état polymérisé,
50 à 98% en poids de monomères a)
2 à 30% en poids de monomères b)
0 à 48% en poids de monomères c₁) et
0 à 5% en poids de monomères c₂).

8. Utilisation selon l'une quelconque des revendications précédentes, dans laquelle le colorant et l'agent anti-corrosion sont choisis parmi les pigments organiques, les pigments inorganiques, les pigments organométalliques ou d'autres composés organiques qui ne sont pas solubles dans la phase aqueuse.

9. Utilisation selon l'une quelconque des revendications précédentes, dans laquelle la teneur en polymères de la dispersion est dans la plage de 5 à 40% en poids, par rapport au poids total des la dispersion.

10. Utilisation selon l'une quelconque des revendications précédentes, dans laquelle au moins 40% des groupes acides contenus dans le polymère existent sous la forme neutralisée.

11. Utilisation selon la revendication 11, dans laquelle les groupes acides contenus dans le polymère sont neutralisés avec une amine de faible masse moléculaire.

12. Procédé de protection de surfaces métalliques contre la corrosion, caractérisé en ce que l'on applique une dispersion de polymères selon l'une quelconque des revendications 1 à 11 sur la surface métallique à protéger, puis on sèche la couche de dispersion appliquée, une couche polymère solide se formant sur la surface à protéger.

13. Procédé selon la revendication 12, caractérisé en ce que la couche polymère solide présente une épaisseur de couche sèche inférieure à 20 µm.
